# EUROPÄISCHE PATENTSCHRIFT

(11) **EP 1 612 386 B1**
(45) Veröffentlichungstag und Bekanntmachung des Hinweises auf die Patenterteilung: **11.01.2012**
(21) Anmeldenummer: 05013633.2
(22) Anmeldetag: 24.06.2005
(51) Int. Cl.: F02B 75/06, F16F 15/123

(54) **Triebrad zum Antreiben eines Nebenaggregates eines Fahrzeuges**
Driving wheel for driving an auxiliary apparatus of a vehicle
Roue motrice pour l'entraînement d'un appareil auxiliaire d'un vehicule

(30) Priorität: 02.07.2004 DE 102004032290
(43) Veröffentlichungstag der Anmeldung: 04.01.2006
(73) Patentinhaber: Schaeffler Technologies GmbH & Co. KG, 91074 Herzogenaurach (DE)
(72) Erfinder: Lehmann, Steffen, 76275 Ettlingen (DE); Muller, Luc, 67100 Strasbourg (FR)

(56) Entgegenhaltungen:
- DE-A1- 4 407 157
- DE-A1- 4 435 201
- DE-A1- 10 059 709
- DE-A1- 19 919 449
- US-A- 5 695 176

## Beschreibung

Die vorliegende Erfindung betrifft ein Triebrad zum Antreiben eines Nebenaggregates einer Brennkraftmaschine eines Fahrzeuges mit einer Dämpfungseinrichtung, wobei das Triebrad an eine Welle gekoppelt ist.

Ein Triebrad nach dem Oberbegriff des Anspruchs 1 ist aus der DE 4407157 A bekannt.

Aus der Druckschrift DE 42 25 314 A1 ist eine Triebscheibe für einen Riemen- oder einen Kettentrieb zum Antreiben von Nebenaggregaten einer Brennkraftmaschine bekannt. Die Triebscheibe ist auf einer Antriebswelle einer Brennkraftmaschine befestigt und weist einen radial äußeren Bereich zum Aufnehmen eines Antriebsmittels, wie ein Riemen oder eine Kette, auf, wobei radial innerhalb dessen eine Tilgermasse und eine Dämpfungseinrichtung angeordnet sind. Die Dämpfungseinrichtung kann in Umfangsrichtung komprimierbare Kraftspeicher, drehgekoppelt und über eine Lagerung relativ zueinander verdrehbar aufweisen, so dass eine Schwingungsdämpfung zwischen der Antriebswelle und dem angeschlossenen Nebenaggregat durch die bekannte Triebscheibe erfolgt.

Ferner ist ein scheibenförmiges Bauteil aus der Druckschrift DE 42 25 304 A1 bekannt. Das bekannte scheibenförmige Bauteil ist für einen Riemenantrieb zum Antrieb von Nebenaggregaten einer Brennkraftmaschine bekannt. Das Bauteil ist auf der Kurbelwelle der Brennkraftmaschine befestigt, wobei das Bauteil eine Dämpfungseinrichtung umfasst, die zwischen einem an der Welle befestigbaren Eingangsteil und einem relativ dazu verdrehbaren Ausgangsteil vorgesehen ist. Das Eingangs- und das Ausgangsteil ist über eine Wälzlagerung zueinander verdrehbar angeordnet. Das bekannte scheibenförmige Bauteil kann somit das Schwingungsverhalten beeinflussen.

Demnach liegt der vorliegenden Erfindung die Aufgabe zugrunde, eine Dämpfungseinrichtung vorzuschlagen, um Schwingungsübertragungen von einem Nebenaggregat auf eine Welle des Fahrzeuges weiter zu verringern.

Diese Aufgabe wird durch ein erfindungsgemäßes Triebrad zum Antreiben eines Nebenaggregates einer Brennkraftmaschine eines Fahrzeuges mit einer Dämpfungseinrichtung nach Anspruch 1 gelöst. Auf diese Weise kann eine Schwingungsübertragung von einem angekoppelten Nebenaggregat auf z. B. einen Steuertrieb der Brennkraftmaschine des Fahrzeuges minimiert werden, ohne dass weitere Zusatzmassen bzw. Ausgleichsmassen erforderlich sind. Durch die Verwendung eines ohne Fett- oder Ölschmierung funktionierenden Torsionsschwingungs-Dämpfers ergeben sich insbesondere weitere Vorteile hinsichtlich einer erforderlichen Wartung des erfindungsgemäßen Triebrades.

Um eine Dämpfungseinrichtung des erfindungsgemäßen Triebrades mit optimalen Dämpfungseigenschaften und mit möglichst geringem Wartungsaufwand sowie geringem Gewicht auszustatten, kann gemäß einer nächsten Weiterbildung der vorliegenden Erfindung vorgesehen sein, dass der Dämpfer einen Dämpferkäfig zur Aufnahme von zumindest einem Federspeicher aufweist, wobei der Dämpferkäfig aus einem zumindest einen Trockenschmierstoff oder dergleichen enthaltenden Werkstoff gefertigt ist. Einerseits weist ein derartiger Dämpferkäfig der Dämpfungseinrichtung ein möglichst geringes Gewicht auf und andererseits wird durch den gewählten Werkstoff ein möglicher Verschleiß durch die Reduzierung der Reibung in dem Dämpferkäfig minimiert.

Vorzugsweise kann als Werkstoff ein faserverstärkter Kunststoff oder dergleichen verwendet werden. Es hat sich gezeigt, dass der Einsatz eines Kunststoffs auf der Basis eines Polyamids, wie z. B. ein so genannter PA66CF10TF20 besonders vorteilhaft ist. Ein derartiger Kunststoff weist etwa 10 % Kohlenstofffasern zur Erhöhung der Bauteilfestigkeit und etwa 20 % Teflon zur Verbesserung der Schmiereigenschaften auf. Es sind jedoch auch andere Werkstoffe bzw. Werkstoffverbindungen einsetzbar.

Der ohne Fett- oder Ölschmierung arbeitende Torsionsschwingungs-Dämpfer des erfindungsgemäßen Triebrades kann in dem Dämpferkäfig mehrere über den Umfang verteilt angeordnete Bogenfederkanäle oder dergleichen aufweisen, in denen jeweils eine Bogenfeder als Federspeicher geführt ist. Somit können die Bogenfedern in den vorzugsweise aus Kunststoff gefertigten Bogenfederkanälen mit geringem Verschleiß zur optimalen Schwingungsdämpfung geführt werden, um das auf das Triebrad wirkende Drehmoment zum Antrieb des Nebenaggregates möglichst schwingungsfrei zu übertragen. Es hat sich gezeigt, dass eine optimale Momentenaufteilung bei der Verwendung von z. B. vier Bogenfedern in dem Dämpferkäfig realisiert wird.

Neben der Aufnahme der Bogenfedern kann der Dämpferkäfig des erfindungsgemäßen Triebrades gemäß einer weiteren Ausgestaltung der Erfindung zumindest eine die Reibungsdämpfung definierende Tellerfeder oder dergleichen aufweisen, welche bevorzugter Weise axial an den die Bogenfederkanäle bildenden Bauteilen anliegt. Somit dient der jeweilige Bogenfederkanal gleichzeitig als axiale Reibfläche für die Tellerfeder, so dass zusätzlich eine wirksame Reibungsdämpfung realisiert wird.

Neben der Funktion als Reibfläche für die Tellerfeder kann der jeweilige Bogenfederkanal zusätzlich eine Verdrehsicherung der Tellerfeder gewährleisten, indem mehrere radial abstehende Fortsätze der Tellerfeder in den jeweiligen Bogenfederkanal eingreifen, so dass ein Mitdrehen bzw. Verdrehen der Tellerfeder vermieden wird.

Insbesondere aus montagerelevanten Gründen kann z. B. gemäß einer weiteren Ausgestaltung der vorliegenden Erfindung vorgesehen sein, dass der Dämpferkäfig aus zwei korrespondierenden Halbschalenelementen gebildet ist. Bei einem derartig ausgestalteten Dämpferkäfig ist es bei der Montage auf einfachste Weise möglich, die einzelnen Bogenfedern in die zugeordneten Bogenfederkanäle einzubringen. Es sind jedoch auch andere konstruktive Ausgestaltungen des Dämpferkäfigs denkbar.

Eine mögliche Variante der vorliegenden Erfindung kann vorsehen, dass eine Mitnehmerscheibe des Triebrades über eine Nabe oder dergleichen an z. B. der Nockenwelle zum Antrieb einer Hochdruckpumpe eines Kraftstoffeinspritzsystems des Fahrzeuges befestigt ist, wobei die Nabe und die Mitnehmerscheibe über den Dämpfer schwingungsfrei miteinander gekoppelt sind. Somit wird mittels einer Wellen-Naben-Verbindung eine Kopplung mit der Nockenwelle oder einem anderen Antriebsteil ermöglicht. Neben dem Einsatz der erfindungsgemäßen Dämpfungseinrichtung für den Antrieb einer Hochdruckpumpe eines Common-Rail-Dieselkraftstoffeinspritzsystems sind auch andere Einsatzgebiete denkbar, bei denen eine entsprechende Schwingungsübertragung über das Antriebssystem vermieden werden soll.

Bei der in das Triebrad integrierten Dämpfungseinrichtung kann ein weiterer Aspekt der vorliegenden Erfindung vorsehen, dass die Nabe Anschlagbereiche oder dergleichen für jede Bogenfeder aufweist, so dass ein vorbestimmter Verdrehwinkel zur Schwingungsdämpfung zwischen der Nabe und der Mitnehmerscheibe definiert und genutzt werden kann. Die Anzahl der verwendeten Anschlagbereiche kann sich nach der Anzahl der vorgesehenen Bogenfedern richten, um eine Drehmomentenübertragung zwischen der Nabe und der Mitnehmerscheibe sicherzustellen. Es sind jedoch auch mehr oder weniger Anschläge als Bogenfedern denkbar.

Vorzugsweise können die Anschlagbereiche der Nabe als axial vorstehende Vorsprünge oder dergleichen ausgebildet sein, welche jeweils in korrespondierenden Ausnehmungen des Dämpferkäfigs bzw. der jeweiligen Halbschalenelemente des Dämpferkäfigs aufgenommen sind und somit die Verdrehung des Dämpfers begrenzen können.

Bei der Montage kann der Dämpferkäfig mit seinen Halbschalenelementen zwischen der Nabe und der Mitnehmerscheibe formschlüssig in das Triebrad eingepresst werden. Auf diese Weise werden die Bogenfederkanäle durch die formschlüssig zusammengefügten Halbschalenelemente gebildet, in denen die Bogenfedern geführt sind.

Zum Befestigen der Nabe an der Nockenwelle oder an einer anderen Welle kann die Nabe einen Kegelsitz oder dergleichen aufweisen, um diese auf ein korrespondierendes Ende der Nockenwelle aufschieben zu können. Um eine drehfeste Verbindung zwischen der Nabe und der Nockenwelle zu realisieren, kann eine axiale Verschraubung verwendet werden. Dazu kann z. B. eine axiale Zentralschraube auf das Ende der Nockenwelle aufgeschraubt werden. Somit wird eine drehfeste Verbindung zur Drehmomentenübertragung realisiert. Es sind jedoch auch andere Verbindungen denkbar.

Um eine Relativbewegung zwischen der Nabe und der Mitnehmerscheibe zur Schwingungsdämpfung möglichst verschleißfrei zu realisieren, kann gemäß einer weiteren Ausgestaltung der vorliegenden Erfindung vorgesehen sein, dass die Nabe und die Mitnehmerscheibe über ein Gleitlager oder dergleichen verdrehbar gelagert sind. Als Gleitlager kann vorzugsweise ein trocken laufendes Mehrstoff-Gleitlager verwendet werden, welches bevorzugt in die Mitnehmerscheibe des Triebrades eingepresst wird. Es sind auch Wälzlagerungen verwendbar. Ferner kann ein zusätzlicher Reibring zur Reibungsdämpfung vorgesehen sein. Es ist auch möglich, dass die Nabe mit einer Stützscheibe oder dergleichen zum Aufnehmen von Axialkräften beim Transport verbunden bzw. verschweißt ist, wobei im Betrieb die Axialschraube und eine mögliche Unterlegscheibe eine sichere Befestigung realisieren.

Damit eine Momentenübertragung von dem Triebrad zum Nebenaggregat bzw. zum Pumpenrad einer Hochdruckpumpe ermöglicht werden kann, wird im Rahmen einer weiteren Ausgestaltung vorgesehen, dass das Triebrad mit einem Zahnriemen- oder einem Kettenantrieb gekoppelt ist. Eine weitere Variante der Erfindung kann vorsehen, dass das Triebrad als Zahnrad ausgebildet ist, welches wiederum mit einem weiteren Zahnrad des Pumpenrades des Nebenantriebs in Eingriff steht, um die Hochdruckpumpe anzutreiben.

Nachfolgend wird die vorliegende Erfindung anhand der Zeichnungen näher erläutert. Es zeigen:
- Figur 1: eine Explosionsdarstellung einer möglichen Ausgestaltung eines erfindungsgemäßen Triebrades;
- Figur 2: eine Draufsicht auf das erfindungsgemäße Triebrad;
- Figur 3: eine geschnittene Ansicht des an einer Nockenwelle befestigten Triebrades; und
- Figur 4: eine weitere geschnittene Teilansicht eines Bogenfederkanals eines an dem Triebrad vorgesehenen Dämpfers.

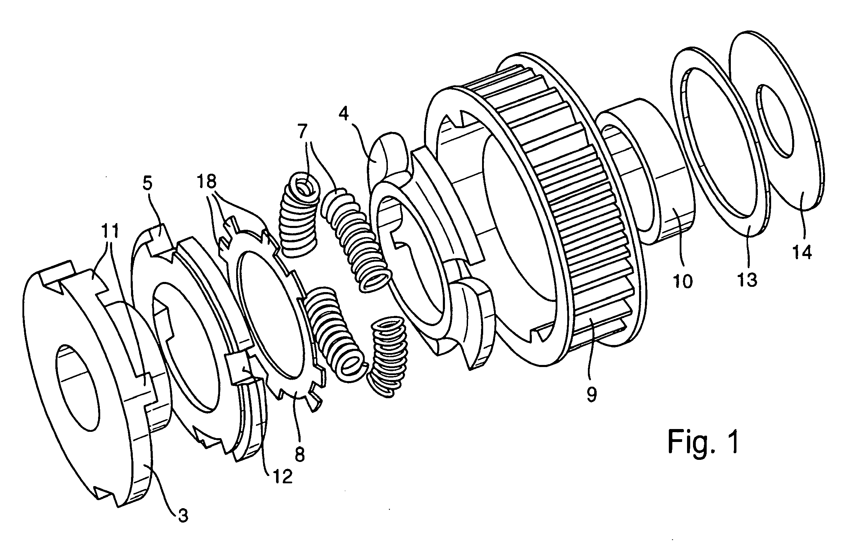

In Figur 1 ist eine mögliche Ausgestaltung eines erfindungsgemäßen Triebrades 1 anhand einer Explosionsdarstellung mit seinen einzelnen Bauteilen dargestellt.

Das erfindungsgemäße Triebrad 1 zum Antreiben eines Nebenaggregates eines Fahrzeuges weist eine Dämpfungseinrichtung auf und ist mit einer Welle mechanisch gekoppelt. Das Antriebsrad 1 kann gemäß einem möglichen Anwendungsbeispiel mit einer Nockenwelle 2 als antreibende Welle gekoppelt sein. Bei diesem Anwendungsbeispiel kann das Triebrad 1 zum Antreiben einer Hochdruckpumpe eines Common-Rail-Dieselkraftstoffeinspritzsystems verwendet werden.

Erfindungsgemäß weist die Dämpfungseinrichtung einen in das Triebrad 1 integrierten Dämpfer auf, welcher ein ohne Schmiermittel arbeitender Torsionsschwingungs-Dämpfer ist. Auf diese Weise kann ohne Zusatzmassen oder Ausgleichsmassen eine erhebliche Reduzierung von Schwingungsübertragungen zwischen der Nockenwelle 2 und der Hochdruckpumpe realisiert werden.

Der Torsionsschwingungs-Dämpfer weist einen Dämpferkäfig zur Aufnahme mehrerer Federspeicher auf, wobei es besonders vorteilhaft ist, dass der Dämpferkäfig aus einem einen Trockenschmierstoff enthaltenden Werkstoff gefertigt ist, so dass ein möglicher Verschleiß der Dämpfungseinrichtung minimiert wird.

Aus Figur 1 ist der Aufbau des erfindungsgemäßen Triebrades 1 ersichtlich. Das Triebrad 1 ist über eine Nabe 3 an der Nockenwelle 2 befestigt. Diese Wellen-Naben-Verbindung wird hier über einen Kegelsitz der Nabe 3 realisiert, so dass die Nabe drehfest an der Nockenwelle 2 verschraubt ist. Der Dämpferkäfig des Dämpfers besteht aus einem ersten Halbschalenelement 4 und einem zweiten Halbschalenelement 5. Der Dämpferkäfig bzw. die beiden Halbschalenelemente 4, 5 weisen mehrere über den Umfang des Triebrades 1 verteilt angeordnete Bogenfederkanäle 6 auf, in denen jeweils eine Bogenfeder 7 als Federspeicher geführt ist. Ferner umfasst der Dämpferkäfig eine die Reibungsdämpfung definierende Tellerfeder 8, welche axial an den die Bogenfederkanäle 6 bildenden Bauteilen 4, 5 anliegt.

Das Triebrad weist eine Mitnehmerscheibe 9 auf, welche mit der Nabe 3 über ein Gleitlager 10 verdrehbar gelagert ist. Als Gleitlager 10 wird ein Mehrstoff-Gleitlager verwendet, welches in die Mitnehmerscheibe 9 eingepresst ist.

Bei der Montage wird der Dämpferkäfig mit seinen korrespondierenden Halbschalenelementen 4, 5 zwischen der Nabe 3 und der Mitnehmerscheibe 9 formschlüssig in das Triebrad 1 eingepresst. Dabei liegt die Tellerfeder 8 an den Bauteilen 4, 5 an. Um einen vorbestimmten Verdrehwinkel zur Schwingungsdämpfung zwischen der Nabe 3 und der Mitnehmerscheibe 9 zu realisieren, sind mehrere Anschlagbereiche für die Bogenfedern 7 vorgesehen. Die Anschlagbereiche der Nabe 3 sind als axial vorstehende Vorsprünge 11 ausgebildet und sind jeweils im montierten Zustand des Triebrades 1 in korrespondierenden Ausnehmungen 12 des Dämpferkäfigs bzw. der Halbschalenelemente 4, 5 aufgenommen und begrenzen somit die Bogenfederverdrehwinkel und dienen gleichzeitig als Anschlag.

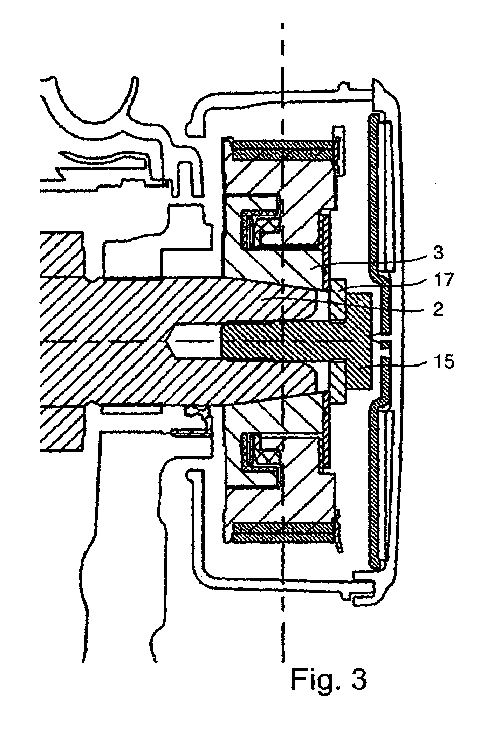

Ferner ist aus Figur 1 ersichtlich, dass an der Mitnehmerscheibe 9 axial ein Reibring 13 und eine Stützscheibe 14 anliegt, welche beim Transport des Triebrades 1 die Tellerfeder-Axialkräfte aufnehmen kann. Im Betrieb übernimmt eine in Figur 3 gezeigte Axialschraube 15 zusätzlich die axiale Sicherung des Triebrades 1.

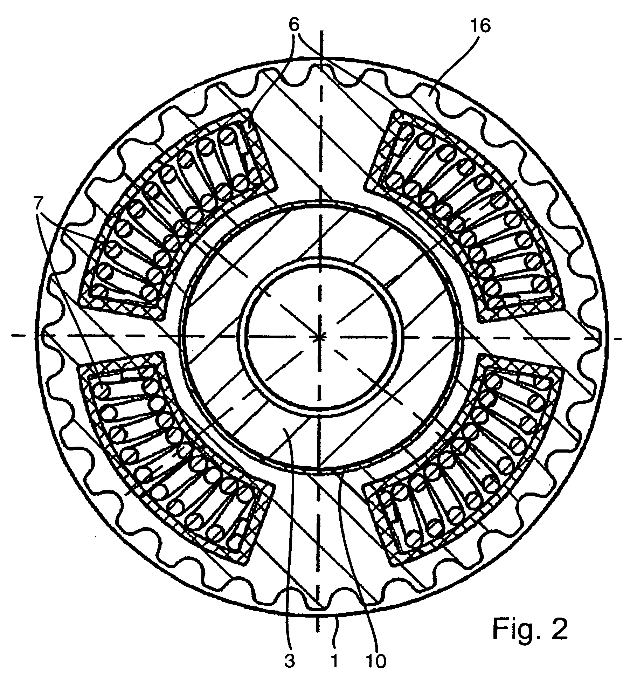

Figur 2 zeigt eine Draufsicht auf das erfindungsgemäße Triebrad 1. Der Dämpferkäfig der Dämpfungseinrichtung des erfindungsgemäßen Triebrades 1 weist vier über den Umfang verteilte Bogenfederkanäle 6 mit den entsprechend geführten Bogenfedern 7 auf. Bei dieser Ausführungsform weist die Mitnehmerscheibe 9 eine Zahnriemenverzahnung 16 an ihrem äußeren Umfang auf, so dass das Triebrad 1 zum Antreiben eines Zahnriemenantriebs zum Übertragen eines Drehmomentes auf ein Pumpenrad der nicht weiter dargestellten Hochdruckpumpe verwendet wird.

Figur 3 zeigt eine Schnittdarstellung des Triebrades 1 mit integriertem Dämpfer auf der Nockenwelle 2. Dabei ist die Nabe 3 mit der Axialschraube 15 und einer Unterlegscheibe 17 an einem Ende der Nockenwelle drehfest über einen Kegelsitz angeschraubt.

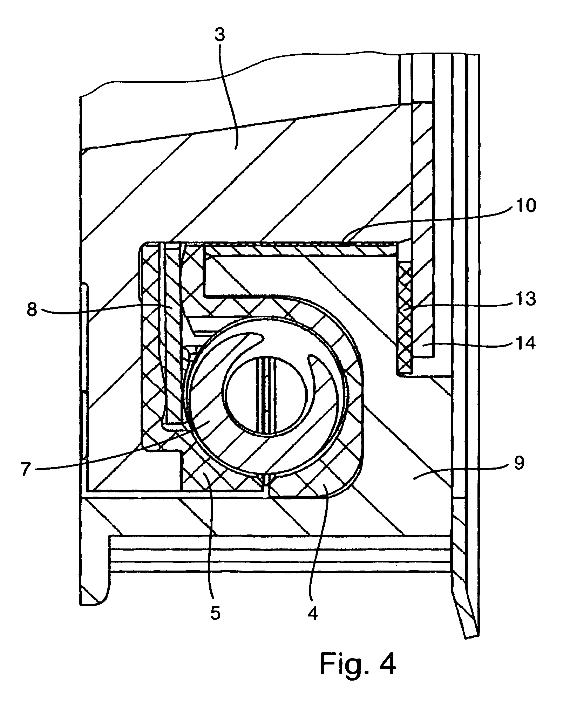

Figur 4 zeigt eine Schnittdarstellung des Dämpfers mit den beiden Halbschalenelementen 4, 5, welche derart ausgestaltet sind, dass die Bogenfederkanäle 6 zur Aufnahme jeweils einer Bogenfeder 7 gebildet werden. Die Mitnehmerscheibe 9 ist über das Gleitlager 10 verdrehbar auf der Nabe 3 gelagert. Durch die korrespondierenden Halbschalenelemente 4, 5 kann die Tellerfeder 8 einerseits reibschlüssig an dem Halbschalenelement 4 als auch formschlüssig an dem Halbschalenelement 5 anliegen. Ferner wird durch mehrere radial abstehende Fortsätze 18 an der Tellerfeder 8 eine Verdrehsicherung realisiert, welche dadurch erreicht wird, dass die Fortsätze 18 in den durch die beiden Halbschalenelemente 4, 5 gebildeten Bogenfederkanal 6 eingreifen.

Insgesamt wird mit dem erfindungsgemäßen Triebrad 1 ein integrierter Torsionsschwingungs-Dämpfer realisiert, welcher ohne Fett- oder Ölschmierung eine Abkopplung zwischen der Nockenwelle 2 und dem Nebenaggregat, z.B. der Hochdruckpumpe einer Common-Rail-Direkteinspritzanlage, realisiert. Dabei wird ein Antriebsmoment von der Nockenwelle 2 auf die Nabe 3 übertragen, welches schwingungsgedämpft über die Federkanäle 6 und die Bogenfeder 7 auf die Mitnehmerscheibe 9 übertragen wird, so dass die Mitnehmerscheibe 9 über z. B. ein Endlos-Übertragungsmittel, wie z.B. einen Zahnriemen oder eine Kette, das Drehmoment schließlich auf ein nicht weiter dargestelltes Pumpenrad einer Hochdruckpumpe überträgt.

### Bezugszeichenliste

- 1.: Triebrad
- 2.: Nockenwelle
- 3.: Nabe
- 4.: Halbschale
- 5.: Halbschale
- 6.: Bogenfederkanal
- 7.: Bogenfeder
- 8.: Tellerfeder
- 9.: Mitnehmerscheibe
- 10.: Gleitlager
- 11.: Vorsprung
- 12.: Ausnehmung
- 13.: Reibring
- 14.: Stützscheibe
- 15.: Axialschraube
- 16.: Zahnriemenverzahnung
- 17.: Unterlegscheibe
- 18.: Fortsätze

## Patentansprüche

1. Triebrad zum Antreiben eines Nebenaggregates einer Brennkraftmaschine eines Fahrzeuges mit einer Dämpfungseinrichtung, wobei das Triebrad mit einer Welle koppelbar ist und die Dämpfungseinrichtung zumindest einen ohne Fett- oder Ölschmierung arbeitenden Torsionsschwingungsdämpfer umfasst, der einen Dämpferkäfig zur Aufnahme von zumindest einem als komprimierbare Feder ausgebildeten Federspeicher aufweist, **dadurch gekennzeichnet, dass** die Feder als Bogenfeder ausgebildet ist und der Torsionsschwingungsdämpfer zwischen einer Mitnehmerscheibe (9) und einer Nabe (3) des Triebrades (1) angeordnet ist, die über eine zwischen diesen (9, 3) vorgesehene Lagerung (10) verdrehbar gelagert sind, wobei die Nabe (3) an der Welle befestigbar ist.

2. Triebrad nach Anspruch 1, **dadurch gekennzeichnet, dass** der Dämpferkäfig aus einem zumindest einen Trockenschmierstoff enthaltenden Werkstoff gefertigt ist.

3. Triebrad nach Anspruch 2, **dadurch gekennzeichnet, dass** als Werkstoff ein faserverstärkter Kunststoff vorgesehen ist.

4. Triebrad nach Anspruch 3, **dadurch gekennzeichnet, dass** der Kunststoff auf der Basis eines Polyamids gebildet ist.

5. Triebrad nach einem der Ansprüche 2 bis 4, **dadurch gekennzeichnet, dass** der Dämpferkäfig mehrere über den Umfang des Triebrades (1) verteilt angeordnete Bogenfeder kanäle (6) aufweist, in denen jeweils eine Bogenfeder (7) als Federspeicher geführt ist.

6. Triebrad nach einem der Ansprüche 2 bis 5, **dadurch gekennzeichnet, dass** der Dämpferkäfig eine die Reibungsdämpfung definierende Tellerfeder (8) aufweist, welche axial an den Bogenfederkanälen (5, 6) anliegt.

7. Triebrad nach Anspruch 6, **dadurch gekennzeichnet, dass** die Tellerfeder (8) mehrere radial abstehende Fortsätze (18) aufweist, welche in dem jeweiligen Bogenfederkanal (6) als Verdrehsicherung eingreift.

8. Triebrad nach einem der Ansprüche 2 bis 7, **dadurch gekennzeichnet, dass** der Dämpferkäfig aus zwei korrespondierenden Halbschalenelementen (4, 5) gebildet ist.

9. Triebrad nach einem der vorangehenden Ansprüche, **dadurch gekennzeichnet, dass** die Mitnehmerscheibe (9) des Triebrades (1) über die Nabe (3) an einer Nockenwelle (2) zum Antrieb einer Hochdruckpumpe eines Kraftstoffeinspritzsystems des Fahrzeuges befestigbar ist.

10. Triebrad nach Anspruch 9, **dadurch gekennzeichnet, dass** die Nabe (3) Anschlagbereiche aufweist, so dass ein vorbestimmter Verdrehwinkel zur Schwingungsdämpfung zwischen der Nabe (3) und der Mitnehmerscheibe (9) definiert ist.

11. Triebrad nach einem der Ansprüche 1 bis 10, **dadurch gekennzeichnet, dass** die Anschlagbereiche der Nabe (3) als axial vorstehende Vorsprünge (11) ausgebildet sind, welche jeweils in korrespondierenden Ausnehmungen (12) des Dämpferkäfigs aufgenommen sind und die Bogenfederverdrehwinkel begrenzen.

12. Triebrad nach einem der Ansprüche 1 bis 11, **dadurch gekennzeichnet, dass** der Dämpferkäfig mit seinen Halbschalenelementen (4, 5) zwischen der Nabe (3) und der Mitnehmerscheibe (9) formschlüssig in dem Triebsrad (1) eingepresst ist.

13. Triebrad nach einem der Ansprüche 9 bis 12, **dadurch gekennzeichnet, dass** die Nabe (3) einen Kegelsitz aufweist zur Aufnahme und Befestigung mittels einer Verschraubung mit einem Ende der Nockenwelle (2), an der das Triebrad befestigt ist.

14. Triebrad nach Anspruch 13, **dadurch gekennzeichnet, dass** als Verschraubung eine A-xialschraube (15) zur axialen Befestigung vorgesehen ist.

15. Triebrad nach einem der Ansprüche 8 bis 14, **dadurch gekennzeichnet, dass** die Nabe (3) und die Mitnehmerscheibe (9) über eine als Gleitlager (10) ausgeführte Lagerung (10) verdrehbar gelagert sind.

16. Triebrad nach Anspruch 15, **dadurch gekennzeichnet, dass** als Gleitlager (10) ein Mehrstoffgleitlager vorgesehen ist, welches in die Mitnehmerscheibe (9) eingepresst ist.

17. Triebrad nach einem der vorangehenden Ansprüche, **dadurch gekennzeichnet, dass** das Triebrad (1) eine Verzahnung (16) für einen Zahnriemen- oder einen Kettenantrieb aufweist.

18. Triebrad nach einem der vorangehenden Ansprüche, **dadurch gekennzeichnet, dass** das Triebrad (1) als Zahnrad (16) ausgebildete Bereiche aufweist, wobei dieses Zahnrad (16) mit einem Zahnrad eines Pumpenrades in Eingriff steht.

## Claims

1. Drive wheel for driving an auxiliary unit of an internal combustion engine of a vehicle with a damping device, it being possible for the drive wheel to be coupled to a shaft, and the damping device comprising at least one torsional vibration damper which operates without grease or oil lubrication and has a damper cage for accommodating at least one spring-force accumulator which is configured as a compressible spring, **characterized in that** the spring is configured as a bow spring and the torsional vibration damper is arranged between a driver plate (9) and a hub (3) of the drive wheel (1) which are mounted rotatably via a mounting (10) which is provided between them (9, 3), it being possible for the hub (3) to be fastened to the shaft.

2. Drive wheel according to Claim 1, **characterized in that** the damper cage is manufactured from a material which contains at least one dry-film lubricant.

3. Drive wheel according to Claim 2, **characterized in that** a fibre-reinforced plastic is provided as material.

4. Drive wheel according to Claim 3, **characterized in that** the plastic is formed on the basis of a polyamide.

5. Drive wheel according to one of Claims 2 to 4, **characterized in that** the damper cage has a plurality of bow-spring channels (6) which are arranged distributed over the circumference of the drive wheel (1) and in which in each case one bow spring (7) is guided as spring-force accumulator.

6. Drive wheel according to one of Claims 2 to 5, **characterized in that** the damper cage has a disc spring (8) which defines the friction damping and bears axially against the bow-spring channels (5, 6).

7. Drive wheel according to Claim 6, **characterized in that** the disc spring (8) has a plurality of radially protruding projections (18) which engage in the respective bow-spring channel (6) as anti-rotation safeguard.

8. Drive wheel according to one of Claims 2 to 7, **characterized in that** the damper cage is formed from two corresponding half-shell elements (4, 5).

9. Drive wheel according to one of the preceding claims, **characterized in that** the driver plate (9) of the drive wheel (1) can be fastened via the hub (3) to a camshaft (2) for driving a high-pressure pump of a fuel injection system of the vehicle.

10. Drive wheel according to Claim 9, **characterized in that** the hub (3) has stop regions, with the result that a predefined rotational angle is defined for vibration damping between the hub (3) and the driver plate (9).

11. Drive wheel according to one of Claims 1 to 10, **characterized in that** the stop regions of the hub (3) are formed as axially protruding projections (11) which are accommodated in each case in corresponding recesses (12) of the damper cage and delimit the bow-spring rotational angles.

12. Drive wheel according to one of Claims 1 to 11, **characterized in that** the damper cage is pressed with its half-shell elements (4, 5) positively into the drive wheel (1) between the hub (3) and the driver plate (9).

13. Drive wheel according to one of Claims 9 to 12, **characterized in that** the hub (3) has a conical seat for receiving and fastening by means of a screw connection to one end of the camshaft (2), to which the drive wheel is fastened.

14. Drive wheel according to Claim 13, **characterized in that** an axial screw (15) is provided as screw connection for axial fastening.

15. Drive wheel according to one of Claims 8 to 14, **characterized in that** the hub (3) and the driver plate (9) are mounted rotatably via a mounting (10) which is configured as a sliding bearing (10).

16. Drive wheel according to Claim 15, **characterized in that** a multiple-material sliding bearing which is pressed into the driver plate (9) is provided as sliding bearing (10).

17. Drive wheel according to one of the preceding claims, **characterized in that** the drive wheel (1) has a toothing system (16) for a toothed-belt drive or a chain drive.

18. Drive wheel according to one of the preceding claims, **characterized in that** the drive wheel (1) has regions which are configured as a gearwheel (16), this gearwheel (16) being in engagement with a gearwheel of an impeller wheel.

## Revendications

1. Roue motrice pour l'entraînement d'un appareil auxiliaire d'un moteur à combustion interne d'un véhicule comprenant un dispositif d'amortissement, la roue motrice pouvant être accouplée à un arbre et le dispositif d'amortissement comprenant au moins un amortisseur d'oscillations de torsion fonctionnant sans graisse ni huile de lubrification, qui présente une cage d'amortisseur pour recevoir au moins un accumulateur à ressort réalisé sous forme de ressort compressible, **caractérisée en ce que** le ressort est réalisé sous forme de ressort en arc et l'amortisseur d'oscillations de torsion est disposé entre un disque d'entraînement (9) et un moyeu (3) de la roue motrice (1), lesquels sont montés de manière rotative par le biais d'un support sur palier (10) prévu entre ceux-ci (9, 3), le moyeu (3) pouvant être fixé à l'arbre.

2. Roue motrice selon la revendication 1, **caractérisée en ce que** la cage d'amortisseur est fabriquée en un matériau contenant au moins un lubrifiant sec.

3. Roue motrice selon la revendication 2, **caractérisée en ce que** l'on prévoit comme matériau un plastique renforcé par des fibres.

4. Roue motrice selon la revendication 3, **caractérisée en ce que** le plastique est formé à base d'un polyamide.

5. Roue motrice selon l'une quelconque des revendications 2 à 4, **caractérisée en ce que** la cage d'amortisseur présente plusieurs canaux de ressort en arc (6) répartis sur la périphérie de la roue motrice (1), dans lesquels est guidé à chaque fois un ressort en arc (7) en tant qu'accumulateur à ressort.

6. Roue motrice selon l'une quelconque des revendications 2 à 5, **caractérisée en ce que** la cage d'amortisseur présente un ressort Belleville (8) définissant un amortissement de friction, qui s'applique axialement contre les canaux de ressort en arc (6).

7. Roue motrice selon la revendication 6, **caractérisée en ce que** le ressort Belleville (8) présente plusieurs projections en saillie (18) qui viennent en prise dans le canal de ressort en arc (6) en tant que fixation contre la rotation.

8. Roue motrice selon l'une quelconque des revendications 2 à 7, **caractérisée en ce que** la cage d'amortisseur est formée de deux éléments de demi-coque correspondants (4, 5).

9. Roue motrice selon l'une quelconque des revendications précédentes, **caractérisée en ce que** le disque d'entraînement (9) de la roue motrice (1) peut être fixé par le biais du moyeu (3) à un arbre à came (2) pour l'entraînement d'une pompe haute pression d'un système d'injection de carburant du véhicule.

10. Roue motrice selon la revendication 9, **caractérisée en ce que** le moyeu (3) présente des régions de butée de sorte qu'un angle de rotation prédéterminé soit défini pour l'amortissement des oscillations entre le moyeu (3) et le disque d'entraînement (9).

11. Roue motrice selon l'une quelconque des revendications 1 à 10, **caractérisée en ce que** les régions de butée du moyeu (3) sont réalisées sous forme de projections (11) saillant axialement, qui sont à chaque fois reçues dans des évidements correspondants (12) de la cage d'amortisseur, et qui limitent l'angle de rotation du ressort en arc.

12. Roue motrice selon l'une quelconque des revendications 1 à 11, **caractérisée en ce que** la cage d'amortisseur est pressée avec ses éléments de demi-coque (4, 5) entre le moyeu (3) et le disque d'entraînement (9) par engagement positif dans la roue motrice (1).

13. Roue motrice selon l'une quelconque des revendications 9 à 12, **caractérisée en ce que** le moyeu (3) présente un siège conique pour la réception et la fixation au moyen d'un vissage d'une extrémité de l'arbre à came (2), sur lequel la roue motrice est fixée.

14. Roue motrice selon la revendication 13, **caractérisée en ce que** l'on prévoit comme vissage une vis axiale (15) pour la fixation axiale.

15. Roue motrice selon l'une quelconque des revendications 8 à 14, **caractérisée en ce que** le moyeu (3) et le disque d'entraînement (9) sont montés de manière rotative par le biais d'un support sur palier (10) réalisé en tant que palier lisse (10).

16. Roue motrice selon la revendication 15, **caractérisée en ce que** l'on prévoit comme palier lisse (10) un palier lisse à plusieurs constituants, qui est pressé dans le disque d'entraînement (9).

17. Roue motrice selon l'une quelconque des revendications précédentes, **caractérisée en ce que** la roue motrice (1) présente une denture (16) pour un entraînement à crémaillère ou à chaîne.

18. Roue motrice selon l'une quelconque des revendications précédentes, **caractérisée en ce que** la roue motrice (1) présente des régions réalisées sous forme de roue dentée (16), cette roue dentée (16) étant en prise avec une roue dentée d'une roue de pompe.
